Europäisches Patentamt

European Patent Office

Office européen des brevets

(11) Publication number: **0 252 707**
**A2**

## (12) EUROPEAN PATENT APPLICATION

(21) Application number: 87305958.8

(22) Date of filing: 06.07.87

(51) Int. Cl.³: **B 60 P 7/14**

(30) Priority: 07.07.86 GB 8616502

(43) Date of publication of application:
13.01.88 Bulletin 88/2

(84) Designated Contracting States:
DE FR GB NL

(71) Applicant: DOVER ROLLER SHUTTERS LIMITED
Wheaton Road
Witham Essex, CM8 3BS(GB)

(72) Inventor: Dover, Donald Henry William
Wheaton Road
Witham Essex, CM7 3BS(GB)

(74) Representative: Boydell, John Christopher et al,
Stevens, Hewlett & Perkins 5 Quality Court Chancery
Lane
London, WC2A 1HZ(GB)

(54) Bulkhead door apparatus for container lorries.

(57) A bulkhead door apparatus for container lorries, said apparatus comprising a bulkhead door (5) arranged to subdivide the cargo area into a forward area (6) and a rear area (7). The door (5) is pivotally mounted on a trolley (9) which runs on a pair of rails (11) secured to the inside surface of the lorry sides. Bolt means operated by handle (12) enable the trolley, and hence the door (5) to be located at selected positions. A second trolley (13), similarly movable along rails (11), mounts a retractable roller system (15) around which are wound cords (16) which extend to and are attached to the lower part of the door so as to relieve the weight of the door as it is pivotted into its horizontal stowage position in the roof of the van. Further both means (17) allow the bottom of the door to be located in both the lowered (vertical) position shown, and in its stowage position.

Figure 1

EP 0 252 707 A2

## "BULKHEAD DOOR APPARATUS FOR CONTAINER LORRIES"

The present invention relates to a bulkhead door apparatus for a container lorry.

Bulkhead doors are used in container lorries to subdivide the cargo space into separate smaller sections. The door or doors are hung within the cargo space and are movable backwards and forwards to alter the relative dimensions of the subdivisions to suit the prevailing conditions. When not in use they can be swung into the top part of the cargo space out of the way. The principal application of these doors is in refrigerated lorries where a lorry which is only part-loaded is subdivided in such a way as to reduce the volume which needs to be refrigerated to suit the amount of cargo being carried, and thus reduce the cost of refrigeration.

The present invention seeks to provide an improved bulkhead door apparatus for container lorries. According to the invention the apparatus comprises a pair of rails for attachment to the inside surfaces of the upper part of the cargo space in a container lorry, two trolleys adapted to run on said rails, a first of said trolleys pivotally mounting a bulkhead door and the second of said trolleys mounting a spring retractable roller system, and cord means extending between the door and the roller system in such a way as to take the weight of the door as it is pivoted. The door has two positions: a first (operative) position in which it is substantially vertical and is operable to subdivide the cargo space into two, and a second (stowage) position in which it is substantially horizontal and is positioned in the upper part of the cargo space out of the way. In between the two positions, movement is effected by pivotting the door about its mounting points on the first of said trolleys, a substantial portion of the weight of the door being taken by the cord means which retracts as the door is raised into the stowage position.  As the door is pivotted between its positions, the two carriages move along the rails with respect to one another, being closest together when the door is in its operative position.  To this end, the two carriages are independently movable on the rails.

Preferably means are provided for locking the door in position so that it cannot move when the vehicle is in motion.  In an embodiment, this is achieved by bolt means in which a shoot is insertable into one of a number of apertures formed in a member attached to an inside surface of the cargo space. These apertures may be so spaced as to provide a large number of selectable positions for the door.  The bolt means can be mounted on the first trolley, or on the door, or both, but preferably the shoot of the bolt means is coaxial with the axis of pivotal mounting of the door, this having the advantage that the door can be raised and lowered whilst being locked in position by the shoot.

Preferably also, further bolt means may be provided to locate that end of the door remote from the pivot:  in the upright position precise location is achieved by means of a further member having plural apertures therealong into which a shoot can be located. This further member is placed parallel to the first mentioned apertured member but lower down, at a position suitable to locate with said further bolt means.  In the stowage position, the further bolt means may locate in the first-mentioned apertured member, thus securing the door in the horizontal position.

In order that the invention may be better understood, an embodiment thereof will now be described by way of example only and with reference to the accompanying drawings in which:-

Figure 1 is a general diagrammatic perspective view of an embodiment of the bulkhead door apparatus of the present invention;

Figure 2 is a perspective view looking upwards of one upper corner of the bulkhead door;

Figure 3 is a front elevation of the left side of the door, looking towards the front of the lorry; and

Figure 4 is a plan view of one end of the trolley carrying the spring retractable roller.

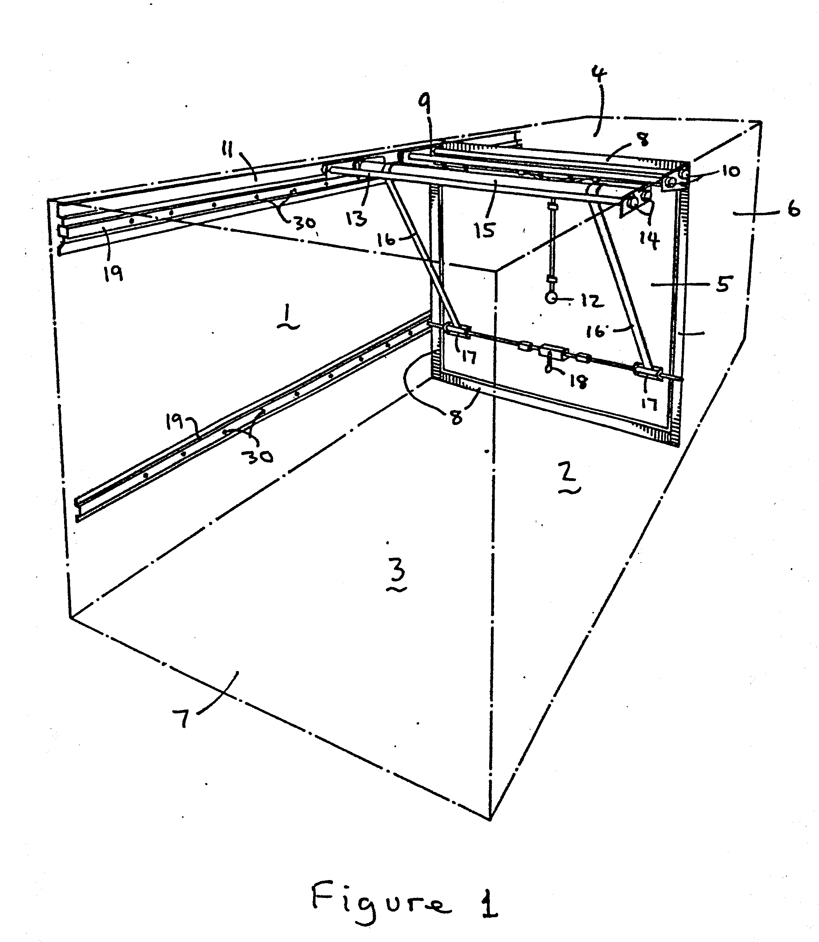

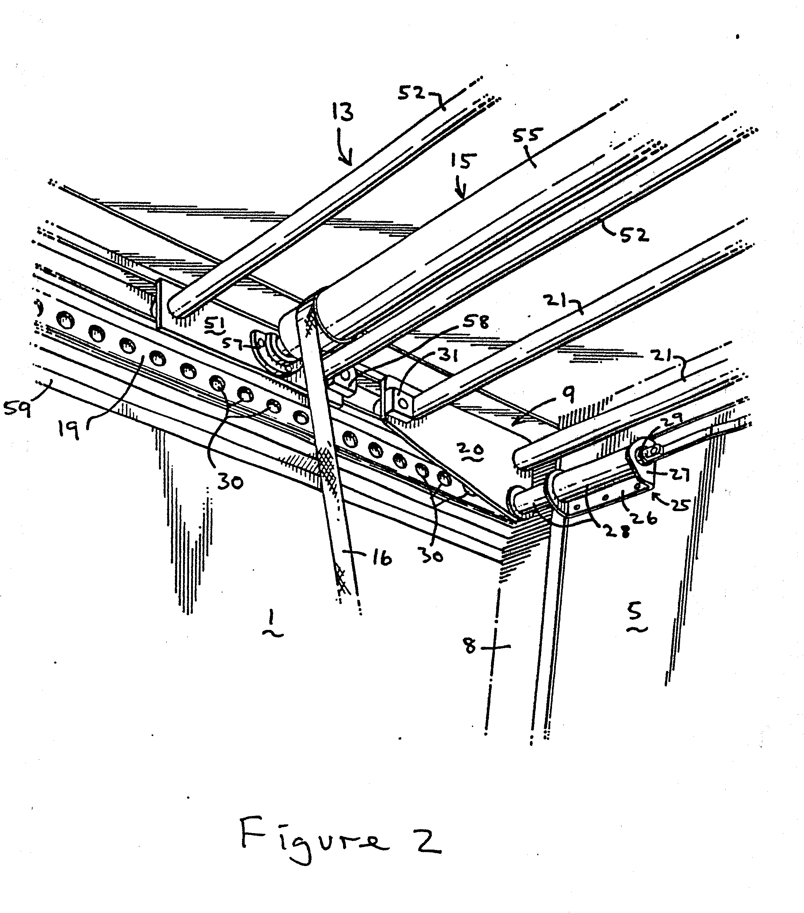

Referring to the drawings and initially in particular to Figure 1 the bulkhead door apparatus is shown erected within the confines of a dotted outline representing the cargo area of a container lorry having sides 1,2, floor 3 and roof 4. The construction of the lorry itself is shown only diagrammatically as it does not form part of the present invention.

The bulkhead door apparatus comprises a bulkhead door 5 which extends right across the cargo area to subdivide the same into a forward area 6, nearest the cab, and a rear area 7. Access to the forward area 6 will normally be by way of the rear doors of the lorry and the bulkhead door 5, but in some designs side doors near the front allow direct access to the forward area.

In a refrigerated container lorry, the bulkhead door 5 will have a thermally insulating construction such as a sandwich of foam plastics material enclosed by sheets of plywood or similar. The thermal insulation may be further enhanced by providing brush seals 8 round the edge of the door.

The door 5 is pivotally mounted on a trolley 9 which has four nylon wheels 10 enabling it to run on a pair of rails 11 secured to the inside surface of the sides 1,2 of the van.   The trolley 9 is freely movable on the rails, but bolt means operated by a handle 12 are used to locate it at selected positions as will be explained hereinafter.

A second trolley 13 has four nylon wheels 14 and is similarly freely movable on the rails 11.   The trolley 13 mounts a retractable roller system 15 around which is wound a pair of cords 16 which are attached at their respective free ends to a lower part of the door 5.   Further bolt means 17 operated by a handle 18 locate the door in the upright position illustrated by location of a pair of shoots in aligned apertures 30 in a pair of multi-apertured elongate members 19 attached to the sides 1,2 of the van.

The door is shown in Figure 1 in its upright (operative) position.   In order to simply raise the door to its stowage position, the handle 18 is first operated to release the bolt means 17 whereupon the door may be pulled forwards, pivotting as it does so, about the trolley 9.   Upwards movement is assisted by the cords 16 which retract as they wind up into the roller system 15, thus taking part of the weight of the door as it is raised.   When the door reaches the approximately horizontal position, it can be located by operating a handle (not shown) on the opposite side of the door from the handle 18 to thereby cause the bolt means 17 to lock into aligned apertures 30 in an upper multi-apertured elongate member 19.   This same member is used to locate the trolley 9, as will be explained hereinafter.

If it is desired to move the door without actually stowing it, then the handle 18 is first released, as before, in order to release the lower part of the door.   Instead of raising the door, however, the handle 12 is now operated to release the trolley 9 and enable it, and hence the door, to be moved to a new position whereat it can be locked by releasing the handle 12 and again operating handle 18.

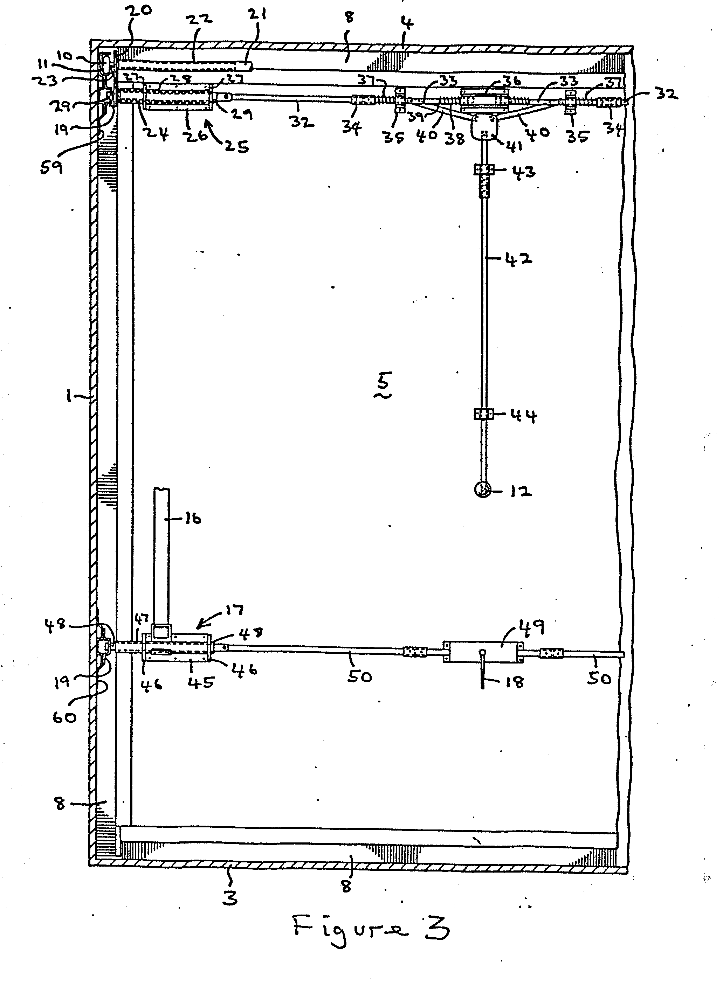

The construction of trolley 9 and the manner in which the door 5 is hung thereon will now be explained in more detail with particular reference to Figures 2 and 3. The trolley 9 comprises a pair of parallel metal plates 20 joined by two hollow metal rods 21. Each plate 20 is formed with three upstanding tubes which are welded over corresponding holes formed in the plate. The upper two of these tubes, one of which is shown dotted under reference 22 in Figure 3 locate the ends of respective hollow rods 21. Pins (not shown) passing through the tubes 22 and rods 21 fasten the structure together. The two upper tubes also locate axles 23 for the nylon wheels 10. The axles 23 are a sliding fit within the bore of the respective upper tubes and, as such, the wheels are able to float to cater for small imperfections in the alignment of the rails 11.

The lower tube upstanding from plate 20 is shown dotted under reference 24 in Figure 3, but is not visible in Figure 2. It is this tube which pivotally supports the door 5; to this end the door is fitted, at each upper corner with a door pivot bracket 25. This bracket comprises a baseplate 26 screwed to the door surface and having upstanding ends 27. Welded into aligned apertures in the ends 27 is a length of tube 28 whose inside diameter is such as to be a sliding fit over the tube 24. The tube 28 may thus rotate about the tube 24 and thereby the door is supported and pivotted. A shoot 29 extends within the tube 24 and is operated by means to be described hereinafter to selectively engage an aperture 30 in the aforementioned upper multi-aperture member 19 and thus lock the trolley 9 and hence the door 5 in position. It will be noted that the shoot 24 does not have to be disengaged from its aperture 30 in order to enable the door to be pivotted about tube 24.

The left-hand end of each plate 20 (when viewed in Figure 2) is fitted with a rubber buffer 31 to reduce the effect of impact with the trolley 13; although the two trolleys 9 and 13 are shown slightly apart in Figure 2 (for clarity), in practice, in the upright position of the door, the two trolleys will abut one another and will move apart as the door is raised.

The two shoots 29 are operated simultaneously by pulling on the aformentioned handle 12, as will now be explained in greater detail with reference to Figure 3.

The inner end of each shoot is pivotally attached to a rod 32 which is joined to a rod 33 by a coupling means 34. The rod 33 is slidably mounted between saddle members 35,36 secured to the surface of door 5. Springs 37,38 act between saddle members 35,36 and, respectively, the coupling means 34 and a pin 39 mounted in rod 33, in order to bias the shoot 29/rod 32/rod 33 in an outwards direction - i.e. in a direction tending to lock the trolley 9. The saddle member 36 is located centrally of the width of the door, and a similar mechanism to that just described operates on the right-hand shoot 29 (not shown). The same references are used for consistency. It will be noted that the two rods 33 end short of one another within the saddle member 36 to allow inwards movement from the position shown.

This inwards movement, to unlock the shoots 29 from their respective apertures 30, is effected by a link mechanism comprising two rigid link members 40 pivotally attached at one end to respective rods 33 and at the other (lower) end to a plate 41. Also attached to the plate 41 is a vertical rod 42 vcertically slidably mounted in saddle members 43,44 and having at its lower end said handle 12 fixed thereon.

As will be apparent, downwards movement of the handle 12 from the position shown will, via the link members 40, draw the two rods 33 towards one another and thus withdraw the shoots 29 from their respective apertures. Release of handle 12 causes the shoots to re-enter the apertures 30 (provided that alignment is maintained) under pressure from springs 37,38.

The construction and operation of the lower bolt means 17 will now be described in more detail with further reference to Figure 3. Each bolt means 17 comprises a base plate 45 attached to the door 5 and having upstanding ends 46 formed with aligned apertures. Welded into these apertures is a hollow rod 47 in which is slidably mounted a shoot 48. The shoot is able to engage in an aperture 30 in the lower member 19. Sliding movement of the shoot is effected by turning handle 18 which operates a latch mechanism 49 (not shown in detail) and causes a respective link rod 50 to be moved backwards and forwards. As already mentioned, the latch mechanism 49 is also operable from a handle positioned on the opposite side of door 5, to enable the shoots 48 to be released from the apertures 30 in the upper member 19 when the door is in the horizontal (stowage) position.

The rod 47 provides a convenient lower attachment point for the cords 16.

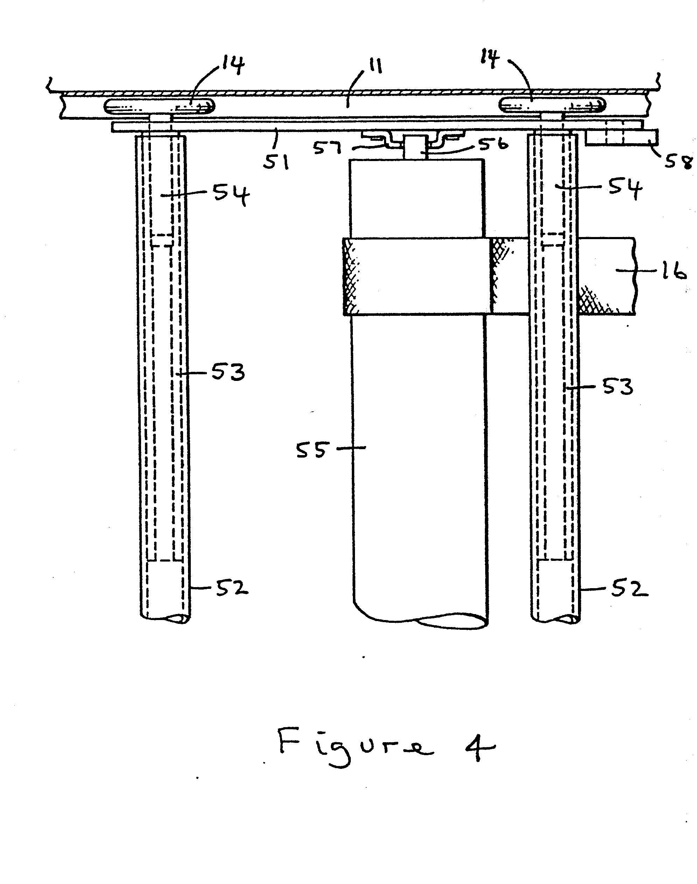

The construction of the trolley 13 will now be described with particular reference to Figures 2 and 4. The trolley comprises a pair of parallel metal plates 51 joined by two hollow rods 52. In order to locate and attach the rods 52, each plate is formed with a pair of apertures over which are welded respective hollow rods 53. The external diameter of rods 53 matches the internal diameter of rods 52 so that rods 52 can slide and securely locate over the rods 53. Pins (not shown) are used to attach the rods 52 and 53 together. Rotatably mounted within rods 53 are respective axles 54 which each mount a respective wheel 14. The axles 54 and hence wheels 14 are able to move axially of the rods 53 to thus allow for imperfections in the alignment of track 11. The manner of attachment of the rods 52 to the plates 51 and the method of mounting the axles and wheels as shown in Figure 4 is identical to that used with respect to the corresponding components in the trolley 9.

The trolley 13 mounts a retractable roller system 15 comprising a spring retractable roller 55 rotatable about an axle 56. The axle 56 is mounted against rotation in respective mounting brackets 57 attached to the plates 51. The roller 55 is of conventional construction and will not be described in detail.

The right-hand end of each plate 51 (when viewed in Figure 2) is fitted with a rubber buffer 58 which is positioned to abut the buffer 31 provided on the plate 20.

The rail 11 and upper member 19 are preferably combined in a single unit which can be readily assembled into the vehicle during installation. To this end, both are mounted on a common aluminium extrusion 59 whose shape and cross section can be clearly seen in Figures 2 and 3. The extrusion has mounting holes (not shown) whereby it may be readily bolted or rivetted to the van sides. Separately mounted on the extrusion, for example by rivetting, is the track 11, made of galvanised steel, and the upper multi-apertured elongate member 19, likewise made of galvanised steel. A similar technique can be used to mount the lower elongate member 19, using an intermediate aluminium extrusion shown under reference 60

0252707

which latter is formed with mounting holes (not shown) whereby it may be attached to the van sides by bolting, rivetting or the like.

0252707

## CLAIMS

1.    Bulkhead door apparatus for container lorries, said apparatus comprising a pair of rails for attachment to the inside surfaces of the upper part of the cargo space in a container lorry, two trolleys adapted to run on said rails, a first of said trolleys pivotally mounting a bulkhead door and the second of said trolleys mounting a spring retractable roller system, and cord means extending between the door and the roller system in such a way as to take the weight of the door as it is pivoted.

2.    Bulkhead door apparatus as claimed in claim 1 further including means for locking the door in position.

3.    Bulkhead door apparatus as claimed in claim 2 wherein said locking means comprises bolt means incorporating a shoot which is selectively insertable into one of a number of apertures formed in a member attached to an inside surface of the cargo space.

4.    Bulkhead door apparatus as claimed in claim 3 wherein the bolt means is mounted on said door in such a position that the shoot is coaxial with the axis of pivotal mounting of the door.

5.    Bulkhead door apparatus as claimed in either one of claims 3 or 4 including further bolt means for locating that end of the door remote from the pivot.

6.    Bulkhead door apparatus as claimed in claim 5 wherein said further bolt means includes aperture means operable to enable the door to be locked in both the raised (horizontal) and the lowered (vertical) position.

7.    Bulkhead door apparatus as claimed in claim 6 wherein said aperture means includes a further member having plural apertures therealong, said further member being positioned parallel to the first-mentioned aperture member to enable securement of the door in the lowered (vertical) position.

8.        Bulkhead door apparatus as claimed in any one of the preceding claims wherein each of said trolleys is provided with at least two wheels whereby the trolley is able to run on said rails, said wheels being mounted in such a way as to be movable along their axis of rotation with respect to the trolley so as to enable the wheels to take up variations in the distance between the rails.

9.        Bulkhead door apparatus as claimed in claim 8 wherein each wheel is mounted on a stub axle, which axle is mounted in a tube forming part of the respective trolley in such a way as to be axially movable with respect to said tube to thus allow the aforsaid axial movement of the wheels with respect to the trolley.

Figure 1

Figure 2

Figure 3

Figure 4